# EUROPÄISCHE PATENTANMELDUNG

(11) **EP 2 093 006 A2**
(43) Veröffentlichungstag der Anmeldung: **26.08.2009**
(21) Anmeldenummer: 09002162.7
(22) Anmeldetag: 17.02.2009
(51) Int. Cl.: B23D 47/02, B27B 5/18, B27B 29/00, B27B 5/10

(54) **Brennholzkappsäge**

(30) Priorität: 25.02.2008 DE 102008010886; 05.11.2008 DE 102008055934
(71) Anmelder: Scheppach Fabrikation von Holzbearbeitungsmaschinen GmbH, 89335 Ichenhausen (DE)
(72) Erfinder: Windrich, Wolfgang, 89358 Ettenbeuren (DE); Bauer, Reinhold, 86476 Langenhaslach (DE); Pfaff, Ernst, 86150 Augsburg (DE)
(74) Vertreter: Munk, Ludwig

(57) **Zusammenfassung**

Bei einer Brennholzkappsäge mit einer Einlegemulde (1, 42) zum Einlegen von Rundlingen (2) und einem gegenüber der Einlegemulde (1, 42) schwenkbar angeordneten Sägenaggregat (5, 48), das einen Motor (13, 62) und ein hiervon antreibbares Sägeorgan (4, 49) enthält, lassen sich dadurch eine hohe Bedienungsfreundlichkeit und leichte Transportierbarkeit erreichen, dass ein als nach unten offener, selbsttragender Blechkasten ausgebildeter Tisch (3, 41) mit der Tiefe der Einlegemulde (1, 42) zumindest entsprechender Höhe vorgesehen ist, wobei die Einlegemulde (1, 42) an die obere Kastenwand angeformt ist, die mit ihrer die Einlegemulde (1, 42) bildenden Knickung in entsprechende Ausschnitte der quer zur Einlegemulde (1, 42) verlaufenden Kastenseitenwände eingreift.

## Beschreibung

Die Erfindung betrifft eine Brennholzkappsäge mit einer Einlegemulde zum Einlegen von Rundlingen und einem gegenüber der Einelgemulde schwenkbar angeordneten Sägenaggregat, das einen Motor und ein hiervon antreibbares Sägeorgan enthält.

Bei den bekannten Anordnungen dieser Art ist das Sägeaggregat auf einem massiven, schweren Untergestell gelagert, das oben lediglich ein die Einlegemulde bildendes Profil trägt. Anordnungen dieser Art sind schwer und sperrig, was sich ungünstig auf die Bedienbarkeit sowie die Lagerhaltung und den Transport auswirkt und einen Versand erschwert. Außerdem sind die bekannten Anordnungen auch nur als freistehende Maschinen verwendbar.

Hiervon ausgehend ist es daher die Aufgabe der vorliegenden Erfindung, eine Anordnung eingangs erwähnter Art zu schaffen, die die oben genannten Nachteile nicht aufweist und dementsprechend bedienungsfreundlich sowie leicht transportierbar, einfach versendbar und variabel verwendbar ist.

Die Lösung dieser Aufgabe wird erfindungsgemäß dadurch erreicht, dass die gattungsgemäße Anordnung mit einem als nach unten offener, selbsttragender Blechkasten ausgebildeten Tisch mit einer der Tiefe der Einlegemulde zumindest entsprechenden Höhe veresehen ist, wobei die Einlegemulde an die obere Kastenwand angeformt ist, die mit ihrer die Einlegemulde bildenden Knickung in entspechende Ausschnitte der quer zur Einlegemulde verlaufenden Kastenseitenwände eingreift.

Da der Tisch als Blechformling ausgbildet ist, ergibt sich nicht nur ein geringes Gewicht, sondern auch eine einfache Herstellung, da die erforderlichen Blechteile einfach durch Stanzen hergestellt werden können. Außerdem bietet der hier vorgesehene Maschinentisch neben der Einlegemulde auch diese flankierende Ablageflächen, was den Bedienungskomfort erhöhen kann. Ein weiterer Vorteil ist darin zu sehen, dass dem den Tisch bildenden Blechkasten trotz seines vergleichsweise geringen Gewichts eine hohe Formstabilität verliehen werden kann.

Vorteilhafte Ausgestaltungen und zweckmäßige Fortbildungen der übergeordneten Maßnahmen sind in den Unteransprüchen angegeben.

Vorteilhaft ist es, wenn der Einlegemulde ein um eine einlegemuldenparallele Achse schwenkbar gelagerter Schwenkarm zugeordnet ist, der mit einer Griffeinrichtung versehen ist und mit einer Rückstelleinrichtung zusammenwirkt und an dem einerseits ein dem Sägeorgan zugeordnetes Schutzgehäuse und andererseits der dem Sägeorgan zugeordnete Motor angebracht sind. Diese Anordnung führt zu einer ergonomisch günstig verlaufenden Wipp- oder Schwenkbewegung des Sägenaggregats und erweist sich dementsprechend als besonders bedienungsfreundlich. Dies wird durch eine Griffeinrichtung mit mehreren, unterschiedlich positionierten Handgriffen noch unterstützt. Hierdurch ist es möglich, dass die Bedienungsperson einen Stellungswechsel bzw. Handwechsel vornehmen kann, so dass es zu keinen Ermüdungen kommt. Außerdem ist auch die Richtung, in der die abzulängenden Rundlinge vorgerückt werden, frei, so dass das Holzlager rechts oder links von der Säge liegen kann. Hinzu kommt, dass die oben erwähnte Anordnung für Rechtshänder und Linkshänder gleichermaßen gut geeignet ist.

Eine weitere zweckmäßige Maßnahme kann darin bestehen, dass der Schwenkarm als geschlossener Kastenträger ausgebildet ist. Hierdurch ergibt sich ebenfalls trotz eines vergleichsweise geringen Gewichts eine hohe Formstabilität. Gleichzeitig ist es in vorteilhafter Weise möglich, im den Schwenkarm bildenden Kastenträger ein Vorgelege unterzubringen, durch welches die in den Kastenträger hineinragende Welle des Motors mit einer hiergegen versetzten, dem Sägeorgan zugeordneten, den Kastenträger durchgreifenden Welle antriebsmäßig verbunden sein kann, so dass eine Über- oder Untersetzung verwirklicht werden kann. Die drehenden Teile der Antriebseinrichtung befinden sich dabei innerhalb des Kastenträgers, was nicht nur gegen Verschmutzung schützt, sondern auch die Verletzungsgefahr vermindert.

In weiterer Fortbildung der übergeordneten Maßnahmen kann das dem Sägeorgan zugeordnete Schutzgehäuse mehrteilig ausgebildet sein und eine nach unten offene Haube sowie eine hierauf gelagerte, nach oben offene Wanne aufweisen, die bezüglich der Achse des vorzugsweise als Kreissägenblatt ausgebildeten Sägeorgans schwenkbar gelagert ist und die mittels eines am Lagerbock abgestützten Steuerhebels verschwenkbar ist. Diese Maßnahmen ergeben in vorteilhafter Weise eine zuverlässige Einhausung des Sägeorgans und damit eine hohe Sicherheit, wobei der Steuerhebel sicherstellt, dass das Sägeorgan beim Herabschwenken des Sägenaggregats sukzessive freigegeben wird und umgekehrt.

Eine weitere vorteilhafte Maßnahme kann darin bestehen, dass die obere Kastenwand im Bereich der die Einlegemulde bildenden Knickung mit durch einlegenmuldenseitig vorstehende Ausprägungen gebildeten Zähnen versehen ist. Diese bilden in vorteilhafter Weise einen Verdrehschutz und verhindern damit ein ungewolltes Drehen eines in die Einlegemulde eingelegten Rundlings.

Zweckmäßig ist das Sägeaggregat mit Abstand von den seitlichen Tischkanten angeordnet. Die Einlegemulde ist dabei durch einen dem Sägeorgan zugeordneten Eintauchschlitz in zwei Abschnitte unterteilt. Hierdurch ist sichergestellt, dass auch das durch einen Schnittvorgang von einem längeren Holzstück abgetrennte Stück nicht unkontrolliert abkippen kann, was die Sicherheit erhöht.

Gemäß einer weiteren, besondes zu bevorzugenden Fortbildung der übergeordneten Maßnahmen kann in der Einlegemulde eine Brücke zum Auflegen flacher Werke anbringbar sein. Hiermit wird das Einsatzfeld der erfindungsgemäßen Säge erhöht.

Vorteilhaft können an dem den Tisch bildenden Kasten diesem zugeordnete Stützbeine schwenkbar angebracht sein, die von einer nach unten abstehenden Stützstellung in eine etwa tischparallele Transportstellung umlegbar sind und umgekehrt. Diese Maßnahmen ergeben in vorteilhafter Weise eine kompakte platzsparende Anordnung für Transport und Lagerung und ermöglichen dennoch die Verwendung der erfindungsgemäßen Anordung als freistehende Maschine. Durch einfaches Abnehmen der Stützbeine ist ein leichter Umbau in eine Tischmaschine möglich.

Zweckmäßig können dabei an den im Bereich einer Tischkante vorgesehenen Stützbeinen Rollen angebracht sein, was sowohl bei aufgestellten Stützbeinen als auch bei umgelegten Stützbeinen eine einfache Ortsveränderung der erfindungsgemäßen Maschine nach Art eines Schubkarrens ermöglicht. Zweckmäßig kann an den jeweils anderen Stützbeinen eine mit einem Ankerloch versehene Lasche angebracht sein. Dies ermöglicht bei freistehender Verwendung eine zuverlässige Erdverankerung.

Weitere vorteilhafte Ausgestaltungen und zweckmäßige Fortbildungen der übergeordneten Maßnahmen sind in den restlichen Unteransprüchen angegeben und aus der nachstehenden Beispielsbeschreibung anhand der Zeichnung näher entnehmbar.

In der nachstehend beschriebenen Zeichnungen zeigen:
- Figur 1: eine von der Motorseite aus gesehene Seitenansicht einer ersten Ausführung der erfindungsgemäßen Brennholzkappsäge,
- Figur 2: die Anordnung gemäß Figur 1 von der gegenüberliegenden Seite aus gesehen,
- Figur 3: eine perspektivische Ansicht der erfindungsgemäßen Brennholzkappsäge gemäß Figuren 1 und 2,
- Figur 4: die Anordnung gemäß Figur 1 mit in die Einlegemulde eingelegter Brücke,
- Figur 5: die Brennholzkappsäge gemäß Figuren 1 und 2 mit umgeklappten Stützbeinen,
- Figur 6: einen vergrößerten Ausschnitt aus Figur 5,
- Figur 7: eine perspektivische Ansicht eines weiteren Ausführungsbeispiels der erfindungsgemäßen Brennholzkappsäge von links vorne und
- Figur 8: die Anordnung gemäß Figur 7 von rechts hinten.

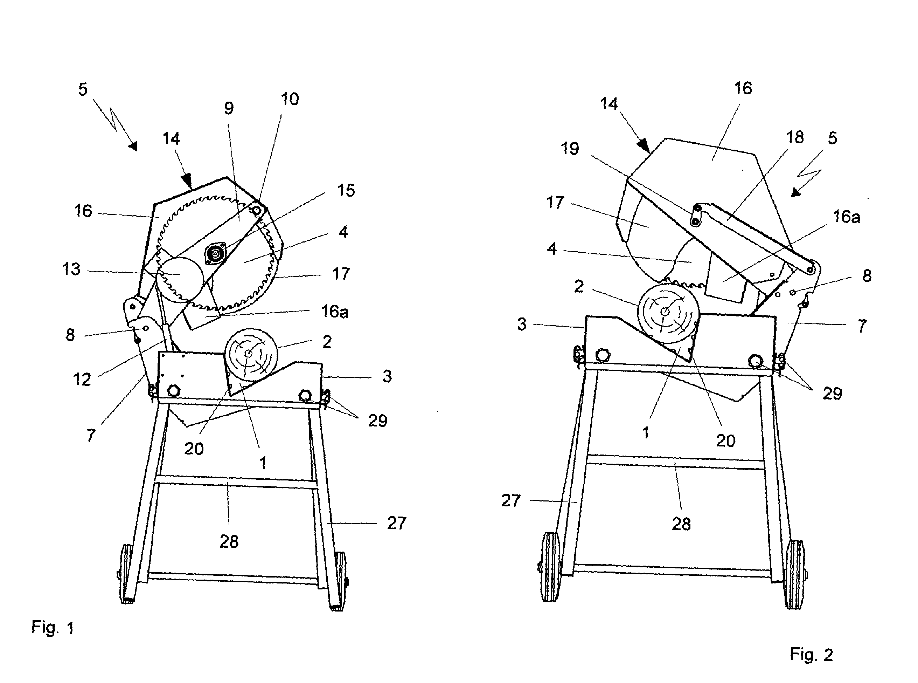

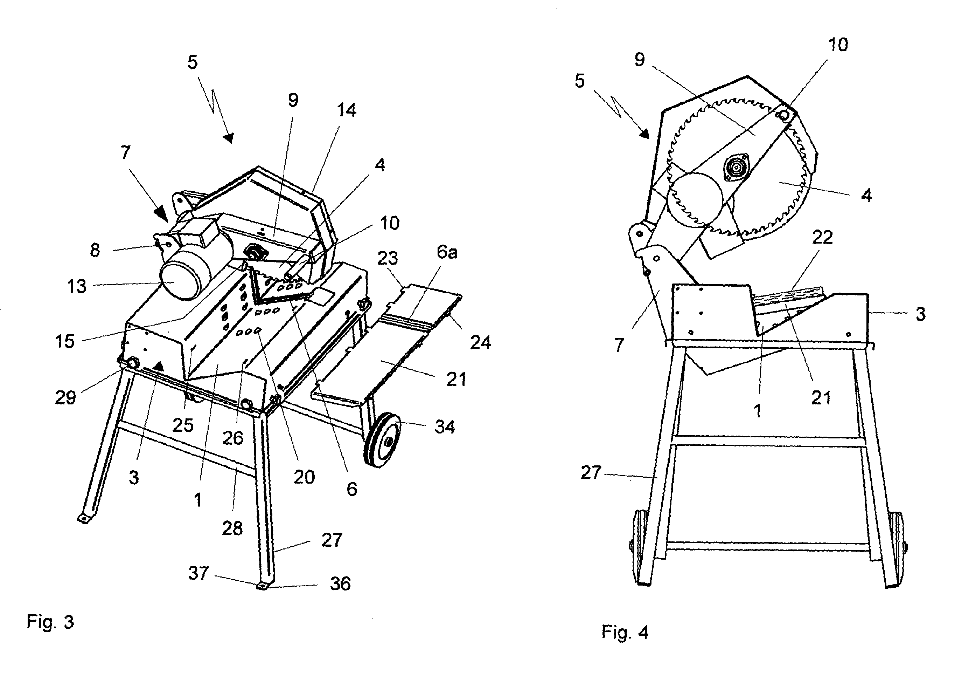

Das den Figuren 1 bis 4 zugrunde liegende Beispiel einer erfindungsgemäßen Brennholzkappsäge enthält einen mit einer Einlegemulde 1 zum Einlegen von in den Figuren 1 und 2 angedeuteten Holzrundlingen 2 versehenen Maschinentisch 3 und ein gegenüber dem Tisch 3 schwenkbar angeordnetes, mit einem motorisch antreibbaren Sägeorgan 4, hier in Form eines Kreissägenblatts, versehenes Sägeaggregat 5. Dementsprechend sind hier die Einlegemulde 1 stationär und das Sägenaggregat 5 hiergegen bewegbar angeordnet. Die Einlegemulde 1 geht, wie am besten aus Figur 3 ersichtlich ist, über die Länge des Tischs 3 durch. Dieser ist im Bereich der Einlegemulde 1 mit einem quer hierzu angeordneten, dem Sägeorgan 4 zugeordneten Eintauchschlitz 6 versehen, in den das Sägeorgan 4 zum Durchschneiden eines in die Einlegemulde 1 eingelegten Holzstücks eintauchen kann. Durch den Eintauchschlitz 6 wird die Einlegemulde 1 in zwei Abschnitte unterteilt, so dass auch nach erfolgtem Schnitt das vom in die Einlegemulde 1 eingelegten Holzstück abgetrennte Stück nicht unkontrolliert abkippen kann. Das Sägenaggregat 5 ist dementsprechend mit Abstand von den seitlichen Tischkanten angeordnet. Zweckmäßig ist die Anordnung so, dass der dem Sägeaggregat 4 zugeordnete Eintauchschlitz 6 die Einlegemulde 1 in einen längeren und einen kürzeren Abschnitt unterteilt.

Der Tisch 3 ist als nach unten offener, selbsttragender Blechkasten ausgebildet, das heißt der den Tisch 3 bildende, nach unten offene Kasten ist aus aneinander angepassten Blechteilen zusammengesetzt. Die Höhe, das heißt die Dicke des Tischs 1 entspricht dabei zumindest der Tiefe der Einlegemulde 1, so dass sich insgesamt eine hohe Formsteifigkeit ergibt. Zur Bildung des Tischs 3 können drei Blechteile Verwendung finden, nämlich ein die Oberseite und die vordere und hintere einlegemuldenparallele Längskante des Tischs enthaltendes Blechteil und zwei die quer zur Einlegemulde verlaufenden Seitenkanten enthaltenden Blechteile. Das obere Blechteil kann dabei zur Bildung der Einlegemulde 1 mit einer v-artigen Knickung und mit zur Bildung der Längskanten mit entsprechenden Randabwinklungen versehen sein. Die beiden Querseitenteile können mit der Kontur der Einlegemulde 1 entsprechenden Ausschnitten versehen sein, in die das obere Blechteil mit der die Einlegemulde 1 bildenden Knickung eingreifen kann. Dies ergibt eine einfache und leichte und dennoch eine hohe Formstabilität aufweisende Anordnung.

Zur Aufnahme des Sägeaggregats 5 ist ein im Bereich der hinteren Tischlängsseite am Tisch 3 angebrachter, die Oberseite des Tisches 3 überragender Lagerbock 7 vorgesehen. Dieser enthält, wie am besten aus Figur 3 erkennbar ist, zwei parallele, am Tisch 3 beispielsweise durch eine Schraubverbindung festlegbare Laschen, die durch eine Achse verbunden sind. Die genannten Laschen können in zugeordnete Schlitze des Tischs 3 eingreifen und innerhalb des den Tisch 3 bildenden Kasten hieran festgelegt sein. Auf der genannten Achse 8 ist ein Schwenkarm 9 schwenkbar gelagert, der mittels eines seitlich abstehenden Griffs 10 betätigbar ist, das heißt von oben nach unten schwenkbar ist und umgekehrt. Dem Schenkarm 9 ist eine als Federeinrichtung ausgebildete Rückstelleinrichtung 12 zugeordnet. Im dargestellten Beispiel ist diese, wie in Figur 1 angedeutet ist, als Gasdruckfeder ausgebildet.

Auf dem Schwenkarm 9 ist das Sägeaggregat 4 gelagert sowie ein zum Antrieb des Sägeaggregats 4 vorgesehener Motor 13 und ein dem Sägeaggregat 4 zugeordnetes Schutzgehäuse 14 aufgenommen. Der Motor 13 befindet sich auf der Griffseite des Schwenkarms 9. Das Schutzgehäuse 14 ist auf der gegenüberliegenden Seite angebracht. Zur Aufnahme des Sägeaggregats 4 ist eine auf dem Schwenkarm 9 gelagerte Welle 15 vorgesehen.

Der Schwenkarm 9 ist, wie am besten aus Figur 3 erkennbar ist, als geschlossener, hohler Kastenträger ausgebildet, der ebenfalls durch Blechformlinge gebildet werden kann. Auch hierbei ergibt sich daher trotz leichter Bauweise eine hohe Formstabilität. Die Welle 15 kann dabei den den Schwenkarm 9 bildenden Kastenträger durchgreifen und auf beiden Seitenwänden gelagert sein. Der Motor 13 ist gegenüber der Welle 15 versetzt. Die in den den Schwenkarm 9 bildenden Kastenträger hineinragende Motorwelle kann dabei durch ein im genannten Kastenträger angeordnetes Über- oder Untersetzungsvorgelege mit der das Sägeaggregat 4 tragenden Welle 15 antriebsmäßig verbunden sein. Das Sägeaggregat 4 befindet sich zweckmäßig neben dem Schwenkarm 9 und ist dementsprechend auf einem aus dem Schwenkarm 9 herausragenden Aufnahmestutzen der Welle 15 aufnehmbar.

Das Schutzgehäuse 14 ist zweckmäßig zweiteilig ausgebildet. Das Schutzgehäuse 14 besteht dementsprechend aus einer ein Oberteil 16 bildenden, nach unten offenen Haube und einem ein Unterteil 17 bildenden, nach oben offenen Wanne. Auf diese Weise lässt sich eine vollständige Einhausung des Sägeorgans 4 erreichen. Das Unterteil 17 greift in das Oberteil 16 ein, dessen lichte Weite größer als die äußere Breite des Unterteils 17 ist. Dieses ist bezüglich der Achse des Sägeorgans 4 zweckmäßig auf dem Oberteil 16 schwenkbar gelagert und kann dementsprechend durch eine entsprechende Drehbewegung aus dem Oberteil 16 ausgefahren werden und umgekehrt. In Figur 1 befindet sich der Schwenkarm 9 in einer oberen Endstellung. Dabei ist das Unterteil 17 soweit aus dem Oberteil 16 ausgefahren, dass es an unteren, das Sägeorgan 4 flankierenden, fahnenartigen Vorsprüngen 16a des Oberteils 16 anschlägt, womit ein Zugriff zum Sägeorgan 4 verhindert wird. Mit zunehmender Absenkung des Schwenkarms 9 wird das Unterteil 17 sukzessive zurückgeschwenkt und dementsprechend in das Oberteil 16 eingefahren, so dass das Sägeorgan 4 nach und nach freigegeben wird, wie aus Figur 2 ersichtlich ist. Die Ein- und Ausfahrbewegung des Unterteils 17 wird durch einen in Figur 2 sichtbaren Steuerhebel 18 bewerkstelligt, der einerseits an den Lagerbock 7 und andererseits an einen mit einer Achse des schwenkbaren Unterteils 17 verbundenen Kurbelarm 19 angelenkt ist.

Eine weitere Sicherheitsmaßnahme kann darin bestehen, dass im Bereich der die Einlegemulde 1 begrenzenden Wände des Tischs 3 zahnartige Vorsprünge 20 vorgesehen sind, die eine Verdrehsicherung bilden. Hierdurch wird verhindert, dass ein in die Einlegemulde 1 eingelegter Rundling 2 unter der Wirkung der vom Sägeorgan 3 ausgeübten Kräfte in Rotation versetzt wird. Die Zähne 20 können eifnach als kelchartige Ausformungen des die Einlegemulde 1 enthaltenden Blechteils des Tischs 3 gebildet werden. Zusätzlich oder alternativ kann im Bereich des Tischs 3 auch eine Spanneinrichtung zum Einspannen eines eingelegten Rundlings 2 vorgesehen sein.

Die Einlegemulde 1 dient in erster Linie zur Aufnahme von Rundlingen 2 der in den Figuren 1 und 2 angedeuteten Art. Um auch flache Werkstücke, z.B. Bretter ablängen zu können bzw. um dies jedenfalls zu erleichtern, kann dem Tisch 3 eine in Figur 3 angedeutete Brücke 21 zugeordnet sein, die als Brettauflage in die Einlegemulde 1 so eingelegt werden kann, dass deren Seitenwände überbrückt sind, wie Figur 4 zeigt. Die Brücke 21 ist im Bereich des Eintauchschlitzes 6 unterbrochen, so dass sich ebenfalls wie im Bereich der Einlegemulde 1 zwei Abschnitte ergeben, die durch einen Durchtrittsschlitz 6a voneinander getrennt sind. Die Brücke 21 wird zweckmäßig so in die Einlegemulde 1 eingebracht, dass ihre Oberfläche rechtwinklig zur vorderen, das heißt dem Sägeaggregat 5 zugewandten Flanke der Einlegemulde 1 verläuft. Hierdurch ist sichergestellt, dass ein in Figur 4 angedeutetes Brett 22 mit seinem Seitenrand sauber an der genannten Flanke der Einlegemulde 1 anliegen kann.

Die Brücke 21 bzw. deren Abschnitte ist bzw. sind zweckmäßig durch eine Steckverbindung tischseitig festlegbar. Hierzu sind die Brücke bzw. deren Abschnitte, wie aus Figur 3 ersichtlich ist, mit über die Längskanten vorspringenden Steckzapfen 23 bzw. 24 versehen, die in zugeordnete, tischseitige Einsteckausnehmungen 25 bzw. 26 einsteckbar sind. Diese können einfach als Stanzlöcher hergestellt werden. Im Bereich der vorderen Längskante der Brücke 21 sind nach vorne vorspringende Steckzapfen 23 vorgesehen, die nach vorne in die zugeordneten Einsteckausnehmungen 25 einführbar sind. Die gegenüberliegenden Steckzapfen 24 weisen nach unten und können nach unten in die zugeordneten Einsteckausnehmungen 26 eingeführt werden. Die Brücke 21 wird dementsprechend zunächst mit den Steckzapfen 23 in die zugeordneten Einsteckausnehmungen 25 eingeführt und dann nach unten gekippt, so dass die Steckzapfen 24 in die Einsteckausnehmungen 26 einlaufen.

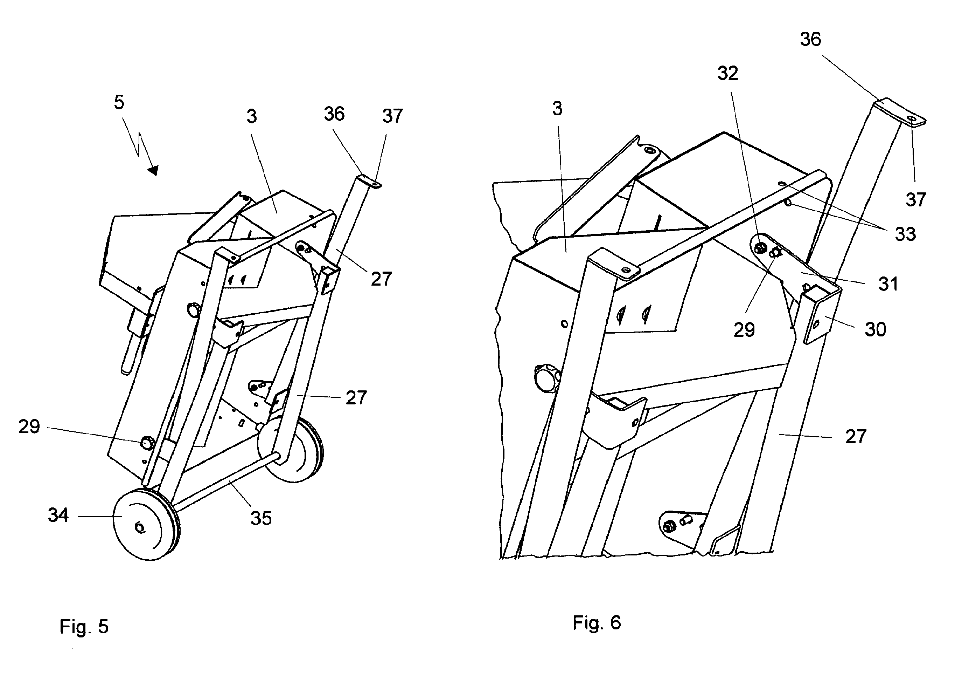

In einfachen Fällen kann die erfindungsgemäße Brennholzkappsäge als sogenannte Tischmaschine Verwendung finden. Hierzu wird der Tisch 3 einfach mit seiner Unterseite auf einen Werktisch etc. aufgelegt. Im dargelegten Beispiel ist eine freistehende Anordnung vorgesehen. Hierzu ist dem Tisch 3 eine Stützeinrichtung zugeordnet. Diese besteht im dargestellten Beispiel aus im Bereich der Ecken des Tischs 3 vorgesehenen Stützbeinen 27 die jeweils paarweise durch eine Traverse 28 zu einem Rahmen verbunden sind. Die Stützbeine 27 bzw. die durch die Traversen 28 gebildeten Rahmen sind schwenkbar am Tisch 3 angebracht und von einer hochstehenden, das heißt vom Tisch 3 nach unten abstehenden Stützstellung, wie sie den Figuren 1 bis 4 zugrundeliegt, in eine etwa tischparallele, den Figuren 5 und 6 zugrundeliegende Transportstellung umlegbar und umgekehrt. Die Stützbeine 27 bzw. die hiervon gebildeten Rahmen sind in den Endstellungen durch Klemmorgane, hier in Form von mit einem Handknopf versehenen Klemmschrauben 29 fixierbar.

Die Stützbeine 27 sind jeweils, wie die Figuren 5 und 6 erkennen lassen, mit ihren oberen Enden an einer Abwinklung 30 einer rechtwinklig zur Stützbeinachse verlaufenden Schwenklasche 31 befestigt, die in den den Tisch 3 bildenden Kasten von unten eingreift und an der Innenseite der jeweils benachbarten seitlichen Kastenwand schwenkbar gelagert ist. Hierzu ist eine die genannte Kastenwand durchgreifende, beispielsweise durch eine Schraube gebildete Schwenkachse 32 vorgesehen. Die Fixierung erfolgt mittels der oben genannten Klemmschrauben 29, die eine jeweils zugeordnete, tischseitige Bohrung 33 durchgreifen und in ein schwenklaschenseitig vorgesehenes Gewinde einschraubbar sind. Dabei ist für jede Stellung der Stützbeine 22 mindestens eine Bohrung vorgesehen. Im dargestellten Beispiel sind der aufgestellten Stellung der Stützbeine zwei Bohrungen 33 zugeordnet, so dass zwei hier in die Lasche 31 und in deren Abwinklung 30 einschraubbare Klemmschrauben Verwendung finden können.

Die Länge der Schwenklaschen 31 ist so bemessen, dass ihre Abwinklung bei umgelegten Stützbeinen 27 den unteren Rand des den Tisch 3 bildenden Kastens zumindest um die Tischbeindicke überragt. Hierdurch ist sichergestellt, dass im umgelegten Zustand Kollisionen der gegenüber dem Tisch 3 seitlich ausgespreizten Stützbeine 27 mit der Unterkante des den Tisch 3 bildenden Kastens vermieden werden. Zweckmäßig beträgt der Überstand der den Stützbeinen 27 eines Rahmens zugeordneten Schwenklaschen auf einer Seite etwa die einfache Stützbeindicke, während der Überstand der den Stützbeinen 27 des gegenüberliegenden Rahmens zugeordneten Schwenklaschen 31 die doppelte Stützbeindicke beträgt. Hierdurch ist es möglich, die Stützbeine 27 der einander gegenüberliegenden Rahmen im umgelegten Zustand aufeinander zu legen, wie Figur 5 anschaulich erkennen lässt.

Um die Transportierbarkeit der erfindungsgemäßen Brennholzkappsäge zu erleichtern sind an den unteren Enden von zwei im Bereich einer Tischquerseite einander gegenüberliegenden Stützbeinen 27 Rollen 34 angeordnet. Hierzu können die genannten Stützbeine 27 zweckmäßig durch eine Achse 35 miteinander verbunden sein, die seitliche, jeweils eine Rolle 34 aufnehmende Achsstummel bildet. Durch die Achse 35 werden die zugehörigen Stützbeine 27 zu einem Rahmen oben genannten Art verbunden. Am unteren Ende der Stützbeine 27 des gegenüber liegenden Rahmens können zweckmäßig vorspringende Laschen 36 vorgesehen sein, die mit einem Loch 37 zum Durchstecken eines in die Erde einschlagbaren Befestigungsankers versehen sind, was in der den Figuren 1 bis 4 zugrunde liegenden Betriebsstellung eine zuverlässige Fixierung der Maschine gegen selbsttätige Ortsveränderung ermöglicht. Wenn die Befestigungsanker entfernt sind, kann die Maschine mit Hilfe der Rollen schubkarrenartig verschoben werden. Dasselbe gilt natürlich auch für den Fall, dass die Stützbeine 27 umgelegt sind, wie aus Figur 5 anschaulich hervorgeht. Hierzu sind die die Rollen 34 tragenden Stützbeine zweckmäßig so bemessen, dass sie im umgelegten Zustand die lagerferne Tischkante überragen und die Rollen 34 sich kollisionsfrei bewegen können.

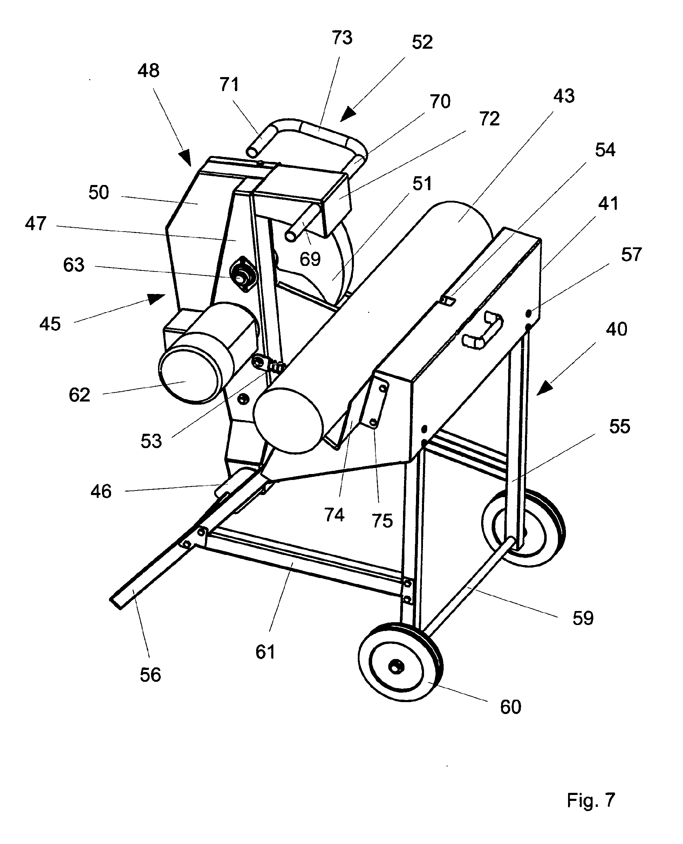

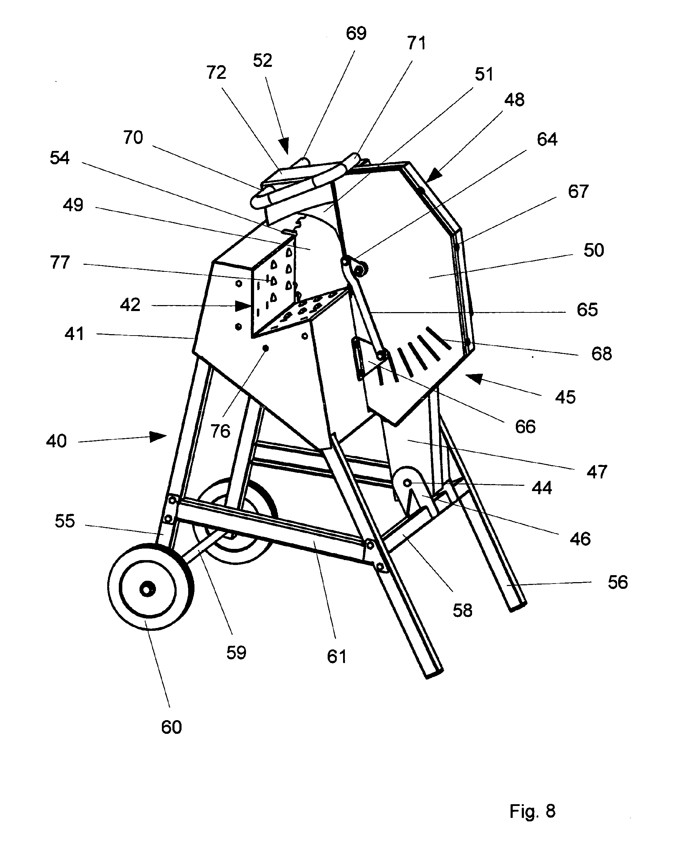

Eine weitere Ausführung einer erfindungsgemäßen Brennholzkappsäge ist in den Figuren 7 und 8 dargestellt.

Die den Figuren 7 und 8 zugrunde liegende Brennholzkappsäge besitzt einen auf einem Stützgestell 40 aufgenommenen Tisch 41, der mit einer Einlegemulde 42 zum Einlegen von Brennholzrundlingen 43 versehen ist. Der Einlegemulde 42 ist eine um eine muldenparallele Achse 44 schwenkbare Wippe 45 zugeordnet. Diese enthält einen auf einem stützgestellseitig vorgesehenen Lagerbock 46 um die Achse 44 schwenkbar gelagerten Schwenkarm 47, der den Tisch 41 überragt und im Bereich seines oberen Endes ein Sägenaggregat 48 trägt, das ein Sägeorgan 49, hier in Form eines um eine muldenparallele Achse drehbar gelagerten Kreissägenblatts, sowie ein dem Sägeorgan 49 zugeordnetes, aus einem Schutzgehäuseoberteil 50 und einem Schutzgehäuseunterteil 51 bestehendes Schutzgehäuse enthält.

Die Wippe 48 ist mit einer Griffeinrichtung 52 versehen und mittels dieser entgegen der Kraft einer Rückstellfeder 53 von einer hinteren Stellung, in welcher das Sägeorgan 49 außer Eingriff mit der Einlegemulde 42 ist, in eine vordere Arbeitsstellung schwenkbar ist, in welcher das Sägeorgan 49 in die Einlegemulde 42 eingreift. Diese ist mit einem Durchtrittsschlitz 54 für das Sägeorgan 49 versehen, so dass ein in die Einlegemulde 42 eingelegtes Holzstück sauber durchtrennt werden kann.

Der gegenüber der Wippe 45 stationäre Tisch 41 ist als nach unten offener, selbsttragender Blechkasten mit der Tiefe der Einlegemulde 42 zumindest entsprechender Höhe ausgebildet, wobei die Einlegemulde 42 an die obere Kastenwand angeformt ist, die mit ihrer die Einlegemulde 42 bildenden Knickung in entsprechende Ausschnitte der quer zur Einlegemulde 42 verlaufenden Kastenstirnseiten eingreift. Das Stützgestell 40 enthält paarweise angeordnete, vordere Stützbeine 55 und hintere Stützbeine 56. Die Stützbeine 55 bzw. 56 greifen mit ihren oberen Enden in den den Tisch 41 bildenden, nach unten offenen Blechkasten ein und sind hieran befestigt. Hierzu kann eine Schweißverbindung oder eine Schraubverbindung vorgesehen sein, wie in Figur 7 durch Schrauben 57 angedeutet ist. Die hinteren Stützbeine 56 sind durch eine etwa auf mittlerer Höhe angeordnete Querstrebe 58 miteinander verbunden, auf welcher der Lagerbock 46 aufgenommen ist, so dass sich eine vergleichsweise tiefe Lage der Schwenkachse der Wippe 45 ergibt. Die vorderen Stützbeine 55 sind im Bereich ihres unteren Endes durch eine Achse 59 miteinander verbunden, die seitliche Rollen 60 trägt, so dass die erfindungsgemäße Brennholzkappsäge nach Art einer Schubkarre verfahrbar ist. Die einander gegenüberliegenden, vorderen und hinteren Stützbeine sind zur Gewährleistung einer guten Standsicherheit gegeneinander geneigt und zur Bewerkstelligung einer Spreizsicherung durch Traversen 61 miteinander verbunden.

Der Schwenkarm 47 ist, wie am besten aus Figur 7 erkennbar ist, als Kastenträger ausgebildet, an den einerseits das Schutzgehäuseoberteil 50 und andererseits ein dem Sägeorgan 49 zugeordneter Antriebsmotor 62 angesetzt sind. Der Schwenkarm 47 ist von einer muldenparallelen Welle 63 durchgriffen, auf der das Sägeorgan 54 aufnehmbar ist. Die Welle 63 ist über ein in den vorliegenden Figuren nicht erkennbares, im kastenförmigen Schwenkarm 47 angeordnetes Vorgelege mit der in den den Schwenkarm 47 bildenden Kasten hineinragenden Welle des Motors 62 antriebsmäßig verbunden. Die Welle 43 besitzt ferner einen in das Schutzgehäuseoberteil 50 hineinragenden Aufnahmestummel zur Aufnahme des hier als Kreissägenblatt ausgebildeten Sägeorgans 49.

Das Schutzgehäuseoberteil 50 ist als muldenseitig offene Haube ausgebildet. Das Schutzgehäuseunterteil 51 ist als umgekehrt offene Wanne ausgebildet und koaxial zur Achse des Sägeorgans 49 im Schutzgehäuseoberteil 50 schwenkbar angeordnet. Zur Bewerkstelligung der gewünschten Schwenkbewegung ist der aus dem Schutzgehäuseoberteil 50 seitlich austretende, vom Schutzgehäuseunterteil 51 seitlich abstehende Lagerzapfen, wie aus Figur 8 ersichtlich ist, über einen Hebelarm 64 mit einem Steuerhebel 65 verbunden, dessen anderes Ende an einem im Bereich einer Seitenfläche des Tisches 41 angeordneten Lagerbock 66 angelenkt ist. Hierdurch wird erreicht, dass das Schutzgehäuseunterteil 51 im Falle einer Schwenkbewegung der Wippe 45 aus dem Schutzgehäuseoberteil 48 ausfahrbar ist und umgekehrt. Der Figur 1 liegt die ausgefahrene Stellung zugrunde, der Figur 8 die eingefahrene Stellung, in welcher das Sägeorgan 49 freigegeben ist. Die Lagerung des Schutzgehäuseunterteils 51 auf dem Schutzgehäuseoberteil 50 befindet sich auf der vom Schwenkarm 47 abgewandten Seite des Schutzgehäuseoberteils 50, wie aus Figur 2 an der Position des Schwenkhebels 64 und Steuerhebels 65 erkennbar ist. Diese Seitenwand des Schutzgehäuseoberteils 50 ist nach Demontage des Lagerbocks 66 vom übrigen, das Schutzgehäuseoberteil 50 bildenden Gehäuse abnehmbar, wie in Figur 2 durch Schrauben 67 angedeutet ist. Auf diese Weise kann das Sägeorgan 49 zur Durchführung eines Wechsels freigelegt werden. Die abnehmbare Seitenwand des Schutzgehäuseoberteils 50 ist in ihrem unteren Bereich mit in Figur 2 angedeuteten Schlitzen 68 versehen, durch die Luft austreten kann.

Die Griffeinrichtung 52 ist so ausgebildet, dass die Bedienungsperson mehrere Positionen einnehmen kann, um die Wippe 45 zum Ablängen von Brennholz zu bedienen. Hierzu hat die Griffeinrichtung 52 mehrere, unterschiedlich positionierte Handgriffe 69, 70, 71. Im dargestellten Beispiel sind mindestens drei unterschiedlich positionierte Handgriffe 69, 70, 71 vorgesehen und zwar zwei bezüglich des Sägeorgans 49 voneinander abgewandte, vordere, d.h. der vom Schwenklager der Wippe 45 entfernten Bedienungsseite der erfindungsgemäßen Brennholzkappsäge zugewandte Handgriffe 69, 70 und ein mittlerer, hinterer, d.h. gegenüber den vorderen Handgriffen 69, 70 nach hinten versetzter Handgriff 71, der das Schutzgehäuseoberteil 50 übergreift.

Zur Bildung der die drei Handgriffe 69, 70, 71 enthaltenden Griffeinrichtung 52 ist im dargestellten Beispiel ein durch ein zweimal abgewinkeltes Rohr gebildeter C- förmiger Bügel mit unterschiedlich langen Schenkeln vorgesehen. Zur Aufnahme dieses Bügels ist ein am Schwenkarm 47 bzw. Schutzgehäuseoberteil 50 angebrachter, über das Sägeorgan 49 in Richtung Einlegemulde 42 auskragender Griffträger 72 vorgesehen. Dieser kann als nach unten offener Kasten ausgebildet sein, der vom längeren Schenkel des die Griffanordnung 52 bildenden Bügels so durchgriffen ist, dass sich die zwei vorderen, linken und rechten Handgriffe 69, 70 ergeben. Der Bügel ist dabei so fixiert, dass der hintere Handgriff 71 das Schutzgehäuseoberteil 50 übergreift, so dass die lösbare Seitenwand ungehindert abnehmbar ist. Der Steg des genannten Bügels befindet sich zweckmäßig auf der vom Schwenkarm 47 abgewandten Seite, so dass sich auch ein seitlicher, gut zugänglicher Handgriff 73 ergeben kann.

In Folge der allseitigen Bedienbarkeit der Wippe 45 (von links vorne, von rechts vorne, von seitlich und von hinten) können die abzulängenden Rundlinge 43 wahlweise von links oder von rechts in die Einlegemulde 42 eingelegt und die abgeschnittenen Abschnitte in umgekehrter Richtung entnommen werden. Um diesen Vorteil zu unterstützen, ist der Eintauchschlitz 54 etwa auf mittlerer Länge der Einlegemulde 42 angeordnet, so dass sich zu beiden Seiten des Eintauchschlitzes 54 etwa gleichlange Auflageflächen für die einzulegenden Rundlinge 43 ergeben. Um auf der Seite, auf der ein Rundling 43 mit seiner größeren Länge aufliegt, eine ausreichend große Auflagefläche zu bekommen, ist wenigstens ein stirnseitig am Tisch 41 anbringbares, V-förmiges, d.h. entsprechend dem Querschnitt der Einlegemulde 42 geformtes Muldenverlängerungsstück 74 vorgesehen, das in Figur 1 erkennbar ist. Dieses kann zweckmäßig an die zugeordnete Stirnseite des Tisches 41 angeschraubt werden, wie in Fig. 1 durch Schrauben 75 angedeutet ist. Dabei sind zweckmäßig im Bereich beider Stirnseiten des Tisches 1 den Schrauben 75 zugeordnete Löcher 76 vorgesehen, so dass das Verlängerungsstück 74 je nach Beschickungsseite bzw. gewünschter Bedienungsseite von der linken zur rechten Stirnseite umsetzbar ist und umgekehrt. Natürlich kann auch jeder Stirnseite ein Verlängerungsstück zugeordnet sein, das dann in Stellung bleiben könnte.

Um ein Drehen der Rundlinge 43 unter der Einwirkung des Sägeorgans 49 zu vermeiden, sind im Bereich der Einlegemulde 42 aus Figur 8 erkennbare, zweckmäßig durch Materialausprägungen gebildete Zähne 77 vorgesehen. Um auch ein Schneiden flacher Werkstücke wie Bretter etc. zu erleichtern, kann eine in die Einlegemulde 42 einlegbare Brücke vorgesehen sein, die eine Auflagefläche für flache Werkstücke bildet. Die genannte Brücke ist natürlich mit einer mit dem Eintauchschlitz 54 korrespondierenden Unterbrechung versehen.

Beim Schwenken der Wippe 45 in Arbeitsrichtung, d.h. um ein Werkstück abzulängen, muss die Kraft der oben bereits erwähnten Rückstellfeder 53 überwunden werden. Diese ist im dargestellten Beispiel als Spiraldruckfeder ausgebildet, die auf einem am Schwenkarm 47 schwenkbar angelenkten Stab aufgenommen ist, der in eine Öffnung der benachbarten Seitenwand des den Tisch 41 bildenden Kastens eingreift. Die Spiraldruckfeder stützt sich dabei einerseits an einem stabseitigen Anschlag und andererseits am Rand der genannten, tischseitigen Öffnung, ab.

## Patentansprüche

1. Brennholzkappsäge mit einer Einlegemulde (1, 42) zum Einlegen von Rundlingen (2) und einem gegenüber der Einlegemulde (1, 42) schwenkbar angeordneten Sägenaggregat (5, 48), das einen Motor (13, 62) und ein hiervon antreibbares Sägeorgan (4, 49) enthält, **dadurch gekennzeichnet, dass** ein als nach unten offener, selbsttragender Blechkasten ausgebildeter Tisch (3, 41) mit der Tiefe der Einlegemulde (1, 42) zumindest entsprechender Höhe vorgesehen ist, wobei die Einlegemulde (1, 42) an die obere Kastenwand angeformt ist, die mit ihrer die Einlegemulde (1, 42) bildenden Knickung in entsprechende Ausschnitte der quer zur Einlegemulde (1, 42) verlaufenden Kastenseitenwände eingreift.

2. Brennholzkappsäge nach Anspruch 1, **dadurch gekennzeichnet, dass** der Einlegemulde (1, 42) ein um eine einlegemuldenparallele Achse schwenkbar gelagerter Schwenkarm (9, 47) zugeordnet ist, der mit einer Griffeinrichtung (10, 52) versehen ist und mit einer Rückstelleinrichtung (12, 53) zusammenwirkt und an dem einerseits ein dem Sägeorgan (4, 49) zugeordnetes Schutzgehäuse (14) und andererseits der dem Sägeorgan (4, 49) zugeordnete Motor (13, 62) angebracht sind.

3. Brennholzkappsäge nach Anspruch 2, **dadurch gekennzeichnet, dass** der Schwenkarm (9, 47) als geschlossener Kastenträger ausgebildet ist und dass dem Sägeorgan (4, 49) eine den den Schwenkarm (9, 47) bildenden Kastenträger durchgreifende, drehbar hierauf gelagerte Welle (15, 63) zugeordnet ist, die über ein im Kastenträger angeordnetes Vorgelege mit der in den Kastenträger hineinragenden Welle (15, 63) des Motors (13, 62) antriebsmäßig verbunden ist und einen seitlichen Aufnahmestummel zur Aufnahme des Sägeorgans (4, 49) aufweist, das vorzugsweise als auf dem Aufnahmestummel der Welle (15, 63) aufnehmbares Kreissägenblatt ausgebildet ist.

4. Brennholzkappsäge nach einem der vorhergehenden Ansprüche 2 oder 3, **dadurch gekennzeichnet, dass** das Schutzgehäuse (14) ein als nach unten offene Haube ausgebildetes Oberteil (16, 50) und ein als nach oben offene Wanne ausgebildetes Unterteil (17, 51) aufweist, das koaxial zur Achse des Sägeorgans (4, 49) schwenkbar im Oberteil (16, 50) angeordnet ist und das mittels eines am Tisch (3, 41) abgestützten Steuerhebels (18, 65) infolge einer Schwenkbewegung des Schwenkarms (9, 47) aus dem Oberteil (16, 50) ausfahrbar bzw. in dieses einholbar ist.

5. Brennholzkappsäge nach einem der vorhergehenden Ansprüche, **dadurch gekennzeichnet, dass** das Sägeaggregat (5, 48) gegenüber den Enden des Tischs (3, 41) nach innen gerückt ist und dass die vorzugsweise mit durch muldenseitig vorstehende Ausprägungen gebildeten Zähnen (20, 77) versehene Einlegemulde (1, 42) durch einen dem Sägeorgan (4, 49) zugeordneten Eintauchschlitz (6, 54) in zwei Abschnitte unterteilt ist.

6. Brennholzkappsäge nach Anspruch 5, **dadurch gekennzeichnet, dass** in die Einlegemulde (1, 42) eine ebenfalls in zwei Abschnitte unterteilte Brücke (21) einlegbar ist, die eine Auflagefläche für flache Werkstücke (22) aufweist.

7. Brennholzkappsäge nach einem der vorhergehenden Ansprüche, **dadurch gekennzeichnet, dass** an dem den Tisch (3, 4) bildenden Kasten diesem zugeordnete Stützbeine (27, 55) angebracht sind, die vorzugsweise von einer vom Tisch (3, 41) nach unten abstehenden Stützstellung in eine etwa tischparallele Transportstellung umlegbar sind und umgekehrt, und vorzugsweise in den Endstellungen durch Klemmorgane (29) fixierbar sind.

8. Brennholzkappsäge nach Anspruch 7, **dadurch gekennzeichnet, dass** die Stützbeine (27) mit ihren oberen Enden an rechtwinklig hierzu angeordneten Schwenklaschen (31) angebracht sind, die in den den Tisch (3) bildenden Kasten von unten eingreifen und an der Innenseite der die Längsseiten des Tischs (3) bildenden Kastenwandungen schwenkbar gelagert und in den Endstellungen hieran fixierbar sind.

9. Brennholzkappsäge nach einem der vorhergehenden Ansprüche 7 oder 8, **dadurch gekennzeichnet, dass** an den unteren Enden von wenigstens zwei Stützbeinen (27, 55) Rollen (34) angebracht sind und dass vorzugsweise an den unteren Enden der übrigen Stützbeine mit Durchstecklöchern (37) versehene Laschen (36) angebracht sind.

10. Brennholzkappsäge nach einem der vorhergehenden Ansprüche **dadurch gekennzeichnet, dass** die Griffeinrichtung (52) mehrere, unterschiedlich positionierte Handgriffe (69, 70, 71, 73) für eine allseitige Bedienbarkeit der Wippe (45) aufweist.

11. Brennholzkappsäge nach Anspruch 10, **dadurch gekennzeichnet, dass** die Griffeinrichtung (52) wenigstens einen in Vorschubrichtung der Wippe (45) vorderen Handgriff (69) bzw. (70) und wenigstens einen in Vorschubrichtung der Wippe (45) hinteren Handgriff (71), vorzugsweise zwei bezüglich des Sägeorgans (49) voneinander abgewandte, vordere Handgriffe (69, 70) und wenigstens einen mittleren, hinteren Handgriff (71) aufweist, der das dem Sägeorgan (49) zugeordnete Schutzgehäuse übergreift.

12. Brennholzkappsäge nach einem der vorhergehenden Ansprüche 10 oder 11, **dadurch gekennzeichnet, dass** zur Bildung der Griffeinrichtung (52) ein zweimal abgewinkelter Bügel vorgesehen ist, der einen gegenüber dem Schutzgehäuse nach vorne vorspringenden, mit diesem am Schwenkarm (47) angebrachten Griffträger (72) mit seinem längeren Schenkel durchgreift und dessen hinterer Schenkel das Schutzgehäuse übergreift.

13. Brennholzkappsäge nach einem der vorhergehenden Ansprüche, **dadurch gekennzeichnet, dass** ein den Tisch (41) aufnehmendes Stützgestell (40) unterhalb des Tisches (41) mit einem dem Schwenkarm (47) zugeordneten Lagerbock (44) versehen ist, der auf einer muldenparallelen Strebe (48) des Stützgestells (40) aufgenommen ist.

14. Brennholzkappsäge nach einem der vorhergehenden Ansprüche, **dadurch gekennzeichnet, dass** im Bereich jeder Stirnseite des Tisches (41) Mittel zur Aufnahme eines Verlängerungsstücks (74) vorgesehen sind.

15. Brennholzkappsäge nach Anspruch 14, **dadurch gekennzeichnet, dass** die vom Schwenkarm (9, 47) abgewandte, dem Steuerhebel (18, 65) benachbarte Seitenwand des Schutzgehäuse-Oberteils (16, 50), auf der das SchutzgehäuseUnterteil (51) schwenkbar gelagert ist, abnehmbar ausgebildet ist.
